# EUROPEAN PATENT APPLICATION

(11) **EP 0 797 018 A1**
(43) Date of publication of application: **24.09.1997**
(21) Application number: 97301909.4
(22) Date of filing: 20.03.1997
(51) Int. Cl.: F16D 23/06

(54) **Synchronizer mechanism**

(30) Priority: 23.03.1996 GB 9606170
(71) Applicant: EATON CORPORATION, Cleveland Ohio 44114 (US)
(72) Inventor: Bills, Keith Anthony, Daventry, Northamptonshire NN11 5SS (GB)
(74) Representative: Clarke, Geoffrey Howard

(57) **Abstract**

A gear and synchronizer assembly (10) includes a baulk ring type synchronizer mechanism (18) between a gear (14) and a shaft (12), the synchronizer mechanism including a first (75) and a second (76) friction clutch. The first firction clutch (75) comprising mating conical friction surfaces (44,52) and the second friction clutch (76) comprising axially facing and radially extending friction surfaces (64,68) with a friction plate (38) sandwiched therebetween.

## Description

### Field of the Invention

This invention relates to a baulk ring-type synchronizer having improved synchronizing performance.

### Background of the Invention

Baulk ring-type synchronizer mechanisms for use in multi-ratio transmissions are well known, as may be seen in many prior art patents such as US -A-4 413 715 for example. Such mechanisms include pairs of friction and jaw members for respectively synchronizing and positive clutching a gear to a shaft, pre-energizer assemblies for engaging the friction members in response to initial engaging movement of a shift sleeve, a hub rotatably fixed to the shaft and having external spline teeth slidably receiving internal spline teeth of the shift sleeve which often defines one of the jaw member pairs, a baulk ring having blocker teeth for arresting engaging movement of the shift sleeve until synchronization is reached and for transferring a shift force from the sleeve to increase the engaging force of the friction members.

It is also known in the multiple ratio transmission art that synchronizer mechanisms may be used to reduce shift time of all or some of the transmission gear ratios. It is also known by the above mentioned patent that the shift effort required by a vehicle operator, i.e., force applied to a shift lever, may be reduced by use of synchronizer mechanisms of self-energizing apparatus. However, the self-energizing apparatus generally increase overall axial width of the synchronizer, may increase required shaft stroke, and add cost and complexity.

### Summary of the Invention

An object of this invention is to provide a baulk ring-type synchronizer with improved performance.

According to the invention, a synchronizer mechanism frictionally synchronizes and then positive connects first and second drives disposed for relative rotation about an axis. The synchronizer mechanism, as disclosed in previously mentioned US-A-4 413 715 and which represents the precharacterizing part of claim 1, includes a first jaw member axially movable by a shift force from a disengaged neutral position toward an engaged position with a second jaw member for positive connecting the drives. The first jaw member includes internal splines slidably mating with external splines axially and rotatably affixed relative to the first drive. The second jaw member is axially and rotatably affixed relative to the second drive. First and second friction clutches are each engageable in response to movement of the first jaw member by the shift force toward the engaged position and each are operative when engaged to produce a synchronizing torque. The first friction clutch includes a radially inner first ring and a radially outer second ring concentric to the axis. First means connect the first ring and the second ring respectively to the first and second drives for rotation with and axial movement relative thereto. The first ring has a radially outwardly facing cone shaped friction surface frictionally interconnectable with a radially inwardly facing cone shaped friction surface of the second ring. The second friction clutch includes first and second radially extending and mutually facing friction surfaces sandwiching a friction plate therebetween. Second means connect the mutually facing friction surfaces for rotation with the second drive and connect the friction plate for rotation with the first drive. First and second blocker surfaces are movable into engagement in response to movement of the first jaw member toward the second jaw member for preventing asynchronous engagement of the jaw members, for transmitting the shift force to the first and second friction clutches to effect engagement thereof, and for producing a torque counter to the synchronizing torque for moving the blocker surfaces out of engagement as synchronization is reached.

The improvement is characterized by the first means connecting the first ring directly to the second drive for non-rotation relative thereto and providing a torque path reacting the synchronizing torque produced by the first friction clutch directly to the second drive, and by the second means connecting the friction plate directly to the second ring for non-rotation and axial movement relative thereto and providing a torque path reacting the synchronizing torque produced by the second friction clutch directly between the second ring and the second drive.

### Brief Description of the Drawings

The synchronizer of the invention is shown in the accompanying drawings in which:
Figure 1 is a half sectional view of a double-acting baulk ring-type synchronizer in a neutral position and disposed for rotation about the axis of a partially shown shaft; and
Figure 2 is a relief view of a broken away portion of a hub element in Figure 1 looking axially relative to the shaft:

### Detailed Description of the Drawings

The term "synchronizer clutch mechanism" shall designate a clutch mechanism utilized to non-rotatably couple a selected ratio gear to a shaft by means of a positive clutch in which attempted engagement of the positive clutch is prevented until members of the positive clutch are brought to substantially synchronous rotation by a synchronizing friction clutch associated with the positive clutch.

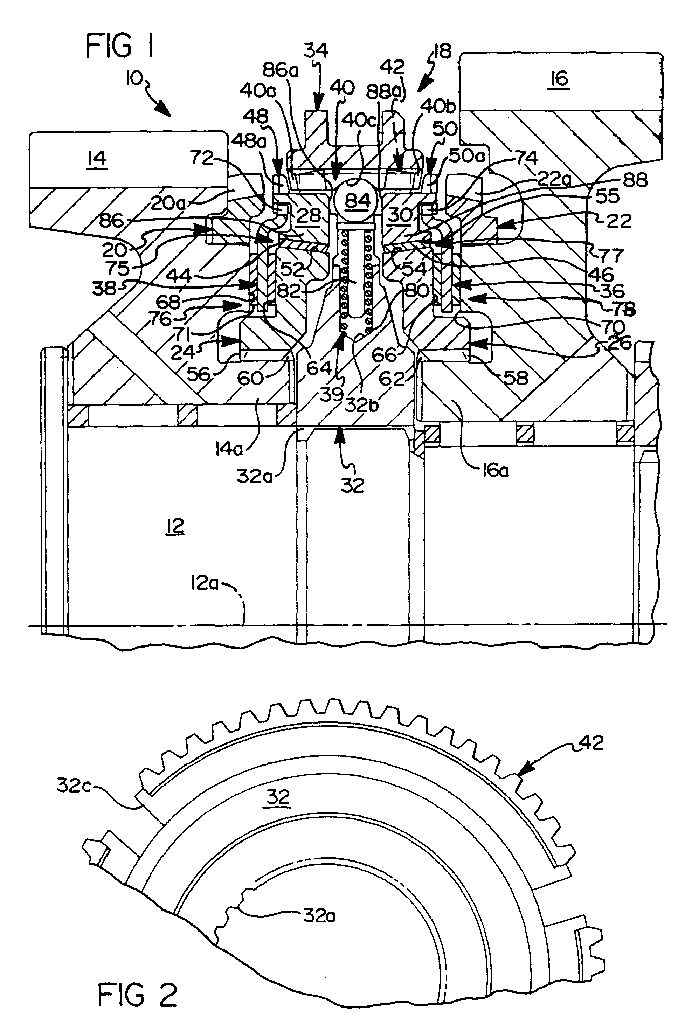

Looking now at Figures 1 and 2, therein is shown a gear and synchronizer assembly 10 which forms part of a multi-ratio change speed transmission. Assembly 10 includes a shaft 12 or first drive mounted for rotation about an axis 12a, axially spaced apart gears 14, 16 or second and third drives supported on the shaft for rotation relative thereto and secured against axial movement relative to the shaft in known manner, and a double-acting synchronizer clutch mechanism 18.

The synchronizer mechanism 18 includes annular second and fourth jaw members 20,22 having jaw teeth 20a, 22a axially and rotatably affixed to gears 14, 16 by welding of the members to the gears for example, first and third inner rings 24, 26, second and fourth outer rings 28, 30, a hub member 32, a shift sleeve 34, first and second friction disks or plates 36, 38, and three circumferentially spaced apart pre-energizer assemblies 39. Hub 32 is rotatably affixed to shaft 12 via splines 32a and is axially fixed relative to shaft 12 in known manner. Shift sleeve 34 includes internal spline teeth 40 defined on a central opening thereof. Spline teeth 40 are in constant close sliding mesh with external spline teeth 42 defined on the outer circumference of hub member 32. The outer rings 28, 30, which are often referred to as baulk rings, include radially inwardly facing cone shaped friction surfaces 44, 46 and blocker teeth sets 48, 50 each having angled blocker surfaces facing in circumferentially opposite directions. Only angled blocker surfaces 48a, 50a facing in the same circumferential are shown herein. The inner rings 24, 26 include radially outwardly facing cone shaped friction surfaces 52, 54 which frictionally mate with surfaces 44, 46 via a friction material 55 which may be bonded to either the surfaces for example, axially extending internal splines 56, 58 mating in close sliding relation with external splines 60, 62 on axially extending hub portions 14a, 16a of gears 14, 16, and first and third axially facing and radially extending friction surfaces 64, 66 respectively in mutually facing relation with second and fourth axially facing and radially extending friction surfaces 68, 70 on axially facing ends of the gears 14, 16. Friction plates 34, 36 with a friction material 71 are sandwiched between the axially facing friction surfaces of the inner rings and gears. The plates include axially extending external splines 72, 74 mating in close sliding relation with internal splines on the outer rings 52, 54. The mating splines of the hub member, shift sleeve, inner rings, and friction plates allow substantially no relative rotation therebetween.

Friction surfaces 44, 52, friction surfaces 64, 68 with plate 34, friction surfaces 46, 54, and friction surfaces 66, 70 with plate 36 respectively define first 74, second 75, third 77, and fourth 76 friction clutches for synchronizing the gears to the shaft prior to engagement of the jaw clutch members. The friction material at the interface of the surfaces may be any of several known materials impregnated or bonded to the surfaces and/or the plate.

Spline teeth 40, 42 have axially extending flank surfaces which continuously mate in close sliding relation so that there is relatively no free play between shift sleeve 34 and shaft 12. Opposite ends of splines 40 define jaw teeth of first and third jaw members which respectively mate with the jaw teeth 20a, 22a on members 20, 22 to positive clutch the gears to the shaft. The opposite axial ends of splines 40 include angled block surfaces 40a, 40b which engage blocker surfaces 48a, 50a to prevent asynchronous engagement of the jaw members as explained further hereinafter.

Each pre-energizer assembly 39, as is known in the art, includes a helical compression spring 80 and plunger 82 disposed in a radially extending blind bore 32b in hub 32 and biasing a roller or ball 84 (herein a roller) into an annular detent groove 40c in shift sleeve splines 40. Pre energizer assembly 39 resiliently positions shift sleeve 34 in the neutral position shown in Fig. 1. Rollers 84 are axially spaced between abutment surfaces 86a, 88a of a plurality of tabs 86, 88 (herein three) formed integral with outer rings 28, 30 and extending axially therefrom. The tabs extend into recesses 32c in hub 32. Recesses 32c, as is known, are circumferentially wide enough relative to the circumferential width of tabs 86, 88 to allow sufficient limited relative rotation for blocker surfaces 48a, 50a to move from positions axially aligned with blocker surfaces 40a, 40b of shift sleeve splines 40 during asynchronous and synchronous conditions, respectively.

When it is desired to couple either gear to the shaft, an appropriate and unshown shift mechanism, such as disclosed in U.S. Patent 4,920,815 moves shift sleeve 34 axially via an unshown shift fork along the axis of shaft 12 either left to couple gear 14 or right to couple gear 16. The shift mechanism may be manually moved by an operator through a linkage system, may be selectively moved by an actuator, or may be moved by means which automatically initiate shift mechanism movement and which also controls the magnitude of the force applied by the shift mechanism. When the shift mechanism is manually moved, the pre-energizer assemblies apply a pre-energizer force proportional to the shift force applied by the operator to the shift sleeve.

The pre-energizer force, depending on the direction of the shift sleeve movement by the shift force, either axially moves outer and inner rings 28, 24 leftward to engage surfaces 44, 52 of the first clutch and surfaces 64, 68 of the second clutch into engagement or axially moves outer and inner rings 30, 26 rightward to engage surfaces 46, 54 of the third clutch and surfaces 66, 70 of the fourth clutch into engagement.

Operation of the pre-energizer assemblies, blocker surfaces, and the friction clutches assumes an asynchronous condition exists between shaft 12 and gear 14 or 16. Since operation for synchronizing and positive connecting both gears is the same, only operation for gear 14 is described. The pre-energizer force, which is proportional to the force of springs 80 and the angle of decent grooves 40c, effects initial axial movement of outer and inner rings 28, 24 to initially engage surfaces 44, 52 of the first friction clutch 75 and surfaces 64, 68 of the second friction clutch 76 in response to leftward axial movement of shift sleeve 34 toward gear 14. Movement of the shaft sleeve is transferred to outer ring 28 via rollers 84 acting against abutment surfaces 86a and to inner ring 24 via engaged cone friction surfaces 44, 52 for engaging friction surfaces 64, 68. Inner ring 24 and friction plate 34 are both free to move axially due to their spline connections to gear 14 and outer ring 28, respectively. The initial engagement the first and second friction clutches is sufficient to develop enough torque to rotate outer ring 28 relative to the hub and shift sleeve for positioning blocker surfaces 48a for engagement with blocker surfaces 40a. When the blocker surfaces are engaged, full operator shift force applied to shift sleeve 34 is transmitted across the blocker surfaces for producing full synchronizing torque by the first and second friction clutches. Since the blocker surfaces are angled or oblique to the plane of rotation, they (in addition to preventing asynchronous engagement of the jaw member and transmitting the operator shift force) also produce a counter torque or unblocking torque counter to the synchronizing torque but of lesser magnitude during asynchronous conditions. As substantial synchronism is reached, the synchronizing torque drops below the unblocking torque, whereby the blocker surfaces move out of engagement to allow continued axial movement of the shift sleeve and engagement of movable jaw member teeth 40 with jaw member teeth 20a affixed to gear 14.

The first friction clutch 75 provides a synchronizing torque path across friction surfaces 44, 52 and directly to gear 14 of the second drive via splines 56. The second friction clutch 76 provides a second synchronizing torque path across friction surfaces 64, 68 and directly to gear 14 via friction surface 68.

Many variations and modifications of the embodiments are believed to be within the spirit of the invention. The following claims are intended to cover the inventive portions of disclosed mechanism and variations and modifications believed to be within the spirit of the invention.

## Claims

1. A synchronizer mechanism for frictionally synchronizing and positive connecting first (12) and second (14) drives disposed for relative rotation about an axis (12a); the mechanism comprising:
a first jaw member (34) axially movable by a shift force from a disengaged neutral position toward an engaged position with a second jaw member (20) for positive connecting the drives, the first jaw member including internal splines (40) slidably mating with external spline (42) axially and rotatably affixed relative to the first drive (12), and the second jaw member (20) axially and rotatably affixed relative to the second drive (14);
first and second friction clutches (75,76) each engageable in response to movement of the first jaw member (34) by the shift force toward the engaged position and each operative when engaged to produce a synchronizing torque;
the first friction clutch (75) including a radially inner first ring (24) and a radially outer second ring (28) concentric to the axis, first means (56,60 and 86,32c) connecting the first ring and the second ring respectively to the first and second drives (12,14) for rotation with and axial movement relative thereto, and the first ring (24) having a radially outwardly facing cone shaped friction surface (52) frictionally interconnectable with a radially inwardly facing cone shaped friction surface (44) of the second ring (28);
the second friction clutch (76) including first and second radially extending and mutually facing friction surfaces (64,68) sandwiching a friction plate (34) therebetween, second means (64,68,56,60,72) connecting the mutually facing friction surfaces for rotation with the second drive and connecting the friction plate (34) for rotation with the first drive (12);
first and second blocker surfaces (40a,48a) movable into engagement in response to movement of the first jaw member (34) toward the second jaw member (20) for preventing asynchronous engagement of the jaw members, for transmitting the shift force to the first and second friction clutches (75,76) to effect engagement thereof, and for producing a torque counter to the synchronizing torque for moving the blocker surfaces out of engagement as synchronization is reached; characterized by
the first means (56,60 and 86,32c) connecting the first ring (24) directly to the second drive for non-rotation relative thereto and providing a torque path reacting the synchronizing torque produced by the first friction clutch directly to the second drive; and
the second means (64,68,56,60.72) connecting the friction plate (34) directly to the second ring (28)for non-rotation and axial movement relative thereto and providing a torque path reacting the synchronizing torque produced by the second friction clutch (76) directly between the second ring (28) and the second drive (14).

2. The synchronizer mechanism of claim 1, wherein the second means (64,68,56,60,72) connects the friction plate directly to the second ring (28) and includes closely engaged axially extending internal and external splines (72) respectively defined by second ring (28) and the clutch plate (34).

3. The synchronizer mechanism of claim 1 or 2, wherein the first means (56,60 and 86,32c) connects the first ring (24) to the second drive (12) and includes closely engaged axially extending internal and external splines (56,60) respectively defined by the first ring (24) and the second drive (14).

4. The synchronizer mechanism of claim 3, wherein the second drive (14) includes an axially extending hub portion (14a) having an outer circumference defining the external splines (56) of the first means (56,60 and 86,32c).

5. The synchronizer mechanism of the preceding claims, wherein the first and second friction surfaces (64,68) of the second friction clutch (76) are affixed against rotation relative to the first ring (24) and the second drive (14), and second friction surface (68) is affixed against axial movement relative to the second drive (14).

6. The synchronizer mechanism of the preceding claims, including a third drive (16) axially spaced from the second drive (14) for rotation relative to the first and second drives (12,14) about the axis (12a);
a third jaw member (34) axially movable by the shift force from a disengaged neutral position toward an engaged position with a fourth jaw member (22) for positive connecting the first and third drives (12,16), the third jaw member including internal splines (40) slidably mating with external splines (42) axially and rotatably affixed relative to the first drive (12), and the fourth jaw member axially and rotatably affixed relative to the third drive (16);
third and fourth friction clutches (77,78) each engageable in response to movement of the third jaw member (34) by the shift force toward the engaged position with the fourth jaw member and each operative when engaged to produce a synchronizing torque;
the third friction clutch (77) including a radially inner third ring (26) and a radially outer fourth ring (30) concentric to the axis (12), third means (58,62 and 88,32c) connecting the third ring (26) and the fourth ring (30) for rotation with and axial movement relative to the first and third drives (12,16), respectively, and the third ring having a radially outwardly facing cone shaped friction surface (54) frictionally interconnectable with a radially inwardly facing cone shaped friction surface (46)of the fourth ring (30);
the fourth friction clutch (78) including radially extending and mutually facing third and fourth friction surfaces (66,70) sandwiching a second friction plate (36) therebetween, fourth means (66,70,58,62,74) connecting the third and fourth friction surfaces for rotation with the third drive (16) and connecting the second friction plate (36) for rotation with the first drive (12);
third and fourth blocker surfaces (40b,50a) movable into engagement in response to movement of the third jaw member (34) toward the fourth jaw member (22) for preventing asynchronous engagement of the third and fourth jaw members (34,22), for transmitting the shift force to the third and fourth friction clutches (77,78) to effect engagement thereof, and for producing a torque counter to the synchronizing torque for moving the third and fourth blocker surfaces (40b,50a) out of engagement as synchronization of the first and third drives (12,16) is reached;
the third means (58,62 and 88,32c) connecting the third ring (26) directly to the third drive (16) for non-rotation relative thereto and providing a torque path reacting the synchronizing torque produced by the third friction clutch (77) directly to the third drive (16); and
the fourth means (58,62,66,70,74) connecting the second friction plate (36) directly to the fourth ring (30) for non-rotation and for axial movement relative thereto and providing a torque path reacting the synchronizing torque produced by the fourth friction clutch (78) directly between the fourth ring (30) and the third drive (16).

7. The synchronizer mechanism of claim 6, wherein the fourth means (66,70,58,60,74) connects the second friction plate (36) directly to the fourth ring (30)and includes closely engaged axially extending internal and external splines (74) respectively defined by fourth ring (30) and the second clutch plate (36).

8. The synchronizer mechanism of claim 6 or 7, wherein the third means (58,70,86,32c) connects the third ring (26) to the third drive (16) and includes closely engaged axially extending internal and external splines (58,70) respectively defined by the third ring (26) and the second drive (16).

9. The synchronizer mechanism of claim 8, wherein the third drive (16) includes an axially extending hub portion (16a) having an outer circumference defining the external splines (62) of the third means (58,70).

10. The synchronizer mechanism of the preceding claims, wherein the third and fourth friction surfaces (66,70) of the fourth friction clutch (78) are affixed against rotation relative to the third drive (16), and fourth friction surface (70) is affixed against axial movement relative to the third (16) drive.
